# EUROPEAN PATENT SPECIFICATION

(11) **EP 3 700 249 B1**
(45) Date of publication and mention of the grant of the patent: **21.07.2021**
(21) Application number: 19382113.9
(22) Date of filing: 19.02.2019
(51) Int. Cl.: H04W 16/18

(54) **METHOD AND SYSTEM FOR OPTIMAL PLANNING OF ACCESS AND TRANSPORT TELECOMMUNICATIONS NETWORKS**
VERFAHREN UND SYSTEM ZUR OPTIMALEN PLANUNG VON ZUGANGS- UND TRANSPORTTELEKOMMUNIKATIONSNETZWERKEN
PROCÉDÉ ET SYSTÈME DE PLANIFICATION OPTIMALE D'ACCÈS ET DE TRANSPORT DE RÉSEAUX DE TÉLÉCOMMUNICATIONS

(43) Date of publication of application: 26.08.2020
(73) Proprietor: Telefonica Digital España, S.L.U., 28013 Madrid (ES)
(72) Inventor: SALLÉ MORENO, Carlos, 28013 MADRID (ES); GARCÍA GARCÍA, Raúl, 28013 MADRID (ES); MARTÍN LAMBAS, David, 28013 MADRID (ES); HERNÁNDEZ PÉREZ, César, 28013 MADRID (ES); RUIZ-OGARRIO MARASSANOVA, Daria, 28013 MADRID (ES)
(74) Representative: Herrero & Asociados, S.L.

(56) References cited:
- US-B1- 8 502 733
- RANAWEERA CHATHURIKA ET AL: "Cost-Optimal Placement and Backhauling of Small-Cell Networks", JOURNAL OF LIGHTWAVE TECHNOLOGY, IEEE, USA, vol. 33, no. 18, 15 September 2015 (2015-09-15), pages 3850-3857, XP011667256, ISSN: 0733-8724, DOI: 10.1109/JLT.2015.2443066 [retrieved on 2015-08-26]
- LIM CHRISTINA ET AL: "Design and Planning for Fiber-Based Small Cell Backhauling", 2018 20TH INTERNATIONAL CONFERENCE ON TRANSPARENT OPTICAL NETWORKS (ICTON), IEEE, 1 July 2018 (2018-07-01), pages 1-3, XP033407448, DOI: 10.1109/ICTON.2018.8473967 [retrieved on 2018-09-26]
- RANAWEERA CHATHURIKA ET AL: "5G C-RAN With Optical Fronthaul: An Analysis From a Deployment Perspective", JOURNAL OF LIGHTWAVE TECHNOLOGY, IEEE, USA, vol. 36, no. 11, 1 June 2018 (2018-06-01), pages 2059-2068, XP011678592, ISSN: 0733-8724, DOI: 10.1109/JLT.2017.2782822 [retrieved on 2018-03-05]

## Description

### Field of the invention

The present invention has its application within the telecommunication sector, particularly in wireless telecommunications networks. More specifically, the present invention proposes a method and system to design (plan) the access and transport network of a mobile telecommunications networks allowing communications between mobile users.

### Background of the invention

Any infrastructure building related project starts with a set of tasks strictly related with planning (that is, with the design of the infrastructure to be built). During the planning process, different information is collected, integrated and analyzed to define the strategy behind the execution of the project. Designing and building a Telecommunications Network is not an exception, where questions like 1) what technology to use, 2) where to start with or 3) what is the budget estimation should be answered before starting to built the network.

Network Planning is a very complex process; it involves selecting the optimal technology and configuration for the access and transport network that will maximize the service impact whilst minimizing the cost of the total deployment. Today, different commercially available tools, processes and systems handle parts of the decision process. For instance, *ATOLL* simulates potential radiofrequency coverage of a radio system, given the available tower, technology, population and orography to understand the potential service characteristics. Other tools like *Pathloss* provides radio link design based on the existence of line of sight between given two points.

Network Planning (for both, access and transport networks) nowadays has several limitations and paths of improvement. First of all, it has a strong manual component, as the actual deployment path of transport solutions is defined manually with GIS (Geographic Information System) tools, which takes a long time and leads many times to sub-optimal deployments. Second, decisions are made with a short-term vision usually based on small increments needed in the existing networks; again, this leads to creating a network that is not optimal as a whole. Third, there is a big decoupling between the different planes included in the decision-making as decisions are made with a commercial view and then the technical solution is designed based on that input; this happens for transport and access networks, which are also quite decoupled between one another. Basically, the network is built based on incremental analysis and there is no global design that draws an optimal network nation-wide.

The high complexity of network design is the main reason why there are no tools that combine an optimal solution for network planning that accounts simultaneously for access and transport networks and that defines the network looking for global (i.e. nation-wide) optimality.

Nowadays there are over 3 billion people who do not have access to mobile internet services (3G/4G/5G) and one of the reasons for this is the high deployment costs; being able to design an optimal transport network is the first big barrier that today is preventing a third of the world population from being connected.

For the above reasons, there is a necessity of a tool which allow an optimal design of a mobile telecommunication networks. In this context, network optimality may be defined as a network that maximizes KPIs, Key Performance Indicators of the mobile services provided (such as people connected or traffic generated), while minimizing the number of access deployments and the total amount of Fiber Optics / Microwave links deployed, always ensuring good Quality of Service (QoS). Smart and efficient decisions, especially for the design of the transport network, are key to achieve these targets.

Document RANAWEERA CHATHURIKA ET AL: "Cost-Optimal Placement and Backhauling of Small-Cell Networks",JOURNAL OF LIGHTWAVE TECHNOLOGY, IEEE, USA, vol. 33, no. 18, 15 September 2015, pages 3850-3857 discloses an example of the prior art.

Document US 8 502 733 B1 discloses another example of the prior art.

Document LIM CHRISTINA ET AL: "Design and Planning for Fiber-Based Small Cell Backhauling",2018 20TH INTERNATIONAL CONFERENCE ON TRANSPARENT OPTICAL NETWORKS (ICTON), IEEE, 1 July 2018, pages 1-3 discloses another example of the prior art.

Document RANAWEERA CHATHURIKA ET AL: "5G C-RAN With Optical Fronthaul: An Analysis From a Deployment Perspective",JOURNAL OF LIGHTWAVE TECHNOLOGY, IEEE, USA, vol. 36, no. 11, 1 June 2018 , pages 2059-2068, discloses another example of the prior art.

### Summary of the invention

The present invention solves the aforementioned problems and overcomes previously explained state-of-the-art limitations by proposing a method and system for optimally designing (planning) the access and transport networks of a wireless (mobile) telecommunications network.

The proposed solution is capable of ingesting (processing) all the information needed (e.g. existing infrastructure, population ...) and come up with a globally optimal network. It solves the three main limitations (previously indicated) of current network planning: First, it selects optimal routes for transport deployments in an automated fashion thanks to modelling and graph theory. Second, it implements a long-term vision with total scope (national level) and leveraging the existing infrastructure. Third, it merges technical and commercial aspects to ensure optimality in both planes.

The proposed solution integrates information from population, existing telecommunications infrastructure and road network information, and creates an integrated network planning. Some of the advantages of the proposed solution are:
- It integrates access network planning and transport network planning in a single tool. It integrates technical specifications with cross specifications to come up with a globally optimal network in terms of quality of service and amount of network elements deployed.
- It implements a long-term strategy that ensures that the final network built will be optimal as a whole and not just locally
- It uses computer graph theory to determine the specific transport deployments, which saves time from doing it manually and ensures optimality.

The invention relates to a computer implemented method, an electronic system and a non-transitory computer readable medium as defined in the appended independent claims. Embodiments representing particular realisations of the invention are defined in the appended dependent claims.

These and other aspects and advantages of the invention will be apparent from and elucidated with reference to the embodiments described hereinafter.

### Description of the drawings

For the purpose of aiding the understanding of the characteristics of the invention, according to a preferred practical embodiment thereof and in order to complement this description, the following figures are attached as an integral part thereof, having an illustrative and non-limiting character:
Figure 1 schematically shows the main functional components of the proposed solutions according to an embodiment of the invention.
Figure 2 shows an example of a set of clusters, result of the access network planning according to an embodiment of the invention.
Figure 3 shows an example of road information discretization and mapping to centroids, proposed in one of the steps of the transport network planning according to an embodiment of the invention.
Figure 4 shows an example of a representation of the line of sight microwave graph obtained in one of the steps of the transport network planning according to an embodiment of the invention.
Figure 5 shows an example of a representation of the fiber optics road graph, obtained in one of the steps of the transport network planning according to an embodiment of the invention.

### Detailed description of the invention

The proposed invention provides a method and system for designing (planning) the access and transport networks of a mobile communications network. In a preferred embodiment, said network will be a 3G/4G/5G mobile telecommunications network (also known as 3G/4G/5G networks), but the proposed solution could be applied to other types of wireless telecommunications networks.

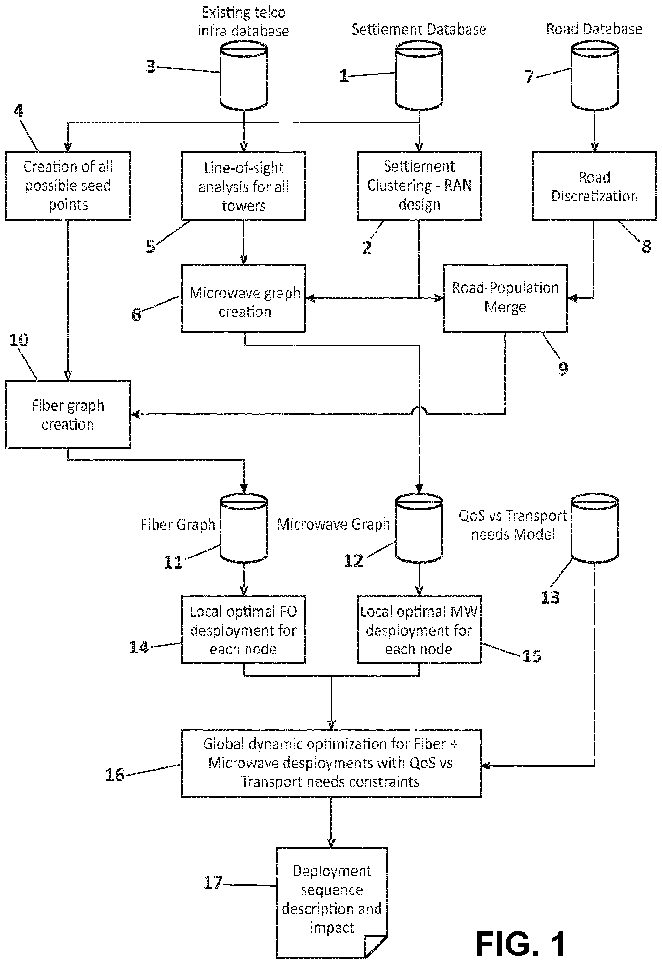

Figure 1 depicts a schematic block diagram of the different components and actions (steps) to be performed in the proposed solution (and the interactions between them) according to an embodiment of the invention (this is only a non-limitative example, not all the components, steps and interactions shown in figure 1 are essential and mandatory to implement the proposed solution).

In figure 1, for simplicity purposes, each action is represented by a different functional component which performs said action, however this is only a simple and general way of representing the proposed solution. As it will be understood by a skilled person, each step could be performed a different electronic device (a different processor), a single electronic device may perform all the steps or several electronic devices could perform one or more of the proposed steps. The same happens with the database shown (that is, all the databases may be stored in the same electronic device or different electronic devices may store one or more of the databases).

In the following line, the proposed solution according to an embodiment of the invention will be explained:

### Access Network Design

The process starts by planning the access Network deployments (2), that is, the places (sites) where the antenna (base stations) of the access network will be located. As the network is a mobile telecommunications network, the access network will be a Radio Access Network (RAN).

Mobile telecommunications networks are arranged according to a cellular structure comprising a plurality of cells, each cell being defined as the set of elementary territory areas served by the radio-electric signal radiated from a respective Base Radio Station (BRS) or antenna also generally called BS (which is also called Base Transceiver station BTS in 2G or Node B in 3G or 4G or gNB in 5G). The RAN design will comprise determining the sites where each station will be located (and optionally the radio resources of each station).

In other words, the goal of this process is to determine the sites where a 3G/4G/5G site should be deployed in order to ensure that the whole population is covered with the minimum number of deployments. For instance, if 10 settlements should be covered, 10 different sites (stations) maybe needed or maybe some settlements are close enough between each other that one single site can be deployed that will give service to all of the nearby settlements. This process performs this analysis for a given area (for example, a whole country) and determines all the sites where a deployment is needed. To do so, it uses the population or settlement database (1) and the existing network infrastructure database (3). In this context a settlement will be a village, part of a city, neighbourhood or generally speaking any area where there is (working, living, shopping...) a group of potential mobile users which should be covered by the designed mobile telecommunications network.

In an embodiment, the process determines first which settlements could be covered by upgrading an existing site, that is, an existing base station of an already deployed mobile telecommunications network. Usually, said already deployed network belongs to the same operator of the access network to be designed or it belongs to another operator whose base stations could be used by the operator of the access network to be designed.

In a preferred embodiment, said network to be designed will be a 3G/4G/5G mobile telecommunications network and the already deployed network will be a 2G network. So, in this embodiment as a first step, it will be determined which settlements could be covered by upgrading an existing 2G (GSM) site with a 3G/4G/5G site. This means analyzing all existing 2G infrastructure (this data will be stored in the existing network infrastructure database 3) and deciding which settlements are receiving a signal and from which site. Once this is done, it can be safely assumed that if a 3G/4G/5G site is deployed using a given tower, all of the settlements around will also be covered. This creates the Overlay clusters, each of which consists of a centroid (the 2G tower) and a set of settlements with population around it covered by said 2G tower (BTS) when upgraded to 3G/4G/5G. Deploying 3G, 4G or 5G on the centroid would result in all settlements having access to 3G/4G/5G services (as for example, Mobile Broadband MBB service). After this process is done, all of the settlements that currently have 2G service will have a RAN solution design for the present telecommunication networks. However, it is necessary to find a solution for all the settlements that do not have 2G (called Greenfield settlements from now on).

Hence, the next step is to create Greenfield clusters, which are groups of settlements that could be covered (with 3G/4G/5G service) with the deployment of one single site (Base Station). They also consist of a centroid (the settlement where the deployment would happen physically) and a set of settlements covered by that deployment (by that Base Station). In short, the process takes all different Greenfield settlements as candidates to be the next deployed site. It then analyzes all possible candidates iteratively and determines which ones guarantee global optimality (i.e. cover all the Greenfield population with the minimum number of deployments).

In order to do this, the following process is followed according to an embodiment of the invention.
0. The following assumptions are made: 1) Towers (Base Station) of a certain height (30-meter according to an embodiment of the invention although the method of the present invention may work with a different tower height selection) are deployed as a standard solution. 2) A propagation model is used (for example, any known radio propagation model) which estimate the coverage radius of a certain tower given the tower height and RAN standard characteristics.
1. First step: Select the site that aggregates (covers) the highest population assuming a 30-meter tower with standard RAN is deployed in its center.
2. Second step: Select this settlement and all of the settlements that would be covered with said tower. The settlement becomes the centroid of a new Greenfield cluster, where the new site will be deployed, providing service to the settlements around it according to the propagation model.
3. Third step: Remove the centroid and the covered settlements from the candidate pool of Greenfield settlements to connect. They will no longer be considered neither as centroid nor as settlements to be covered (it will be assumed that this cluster has already been deployed).
4. Fourth step: Repeat from Step 1 again until there are no more candidates (no more Greenfield settlements to cover).

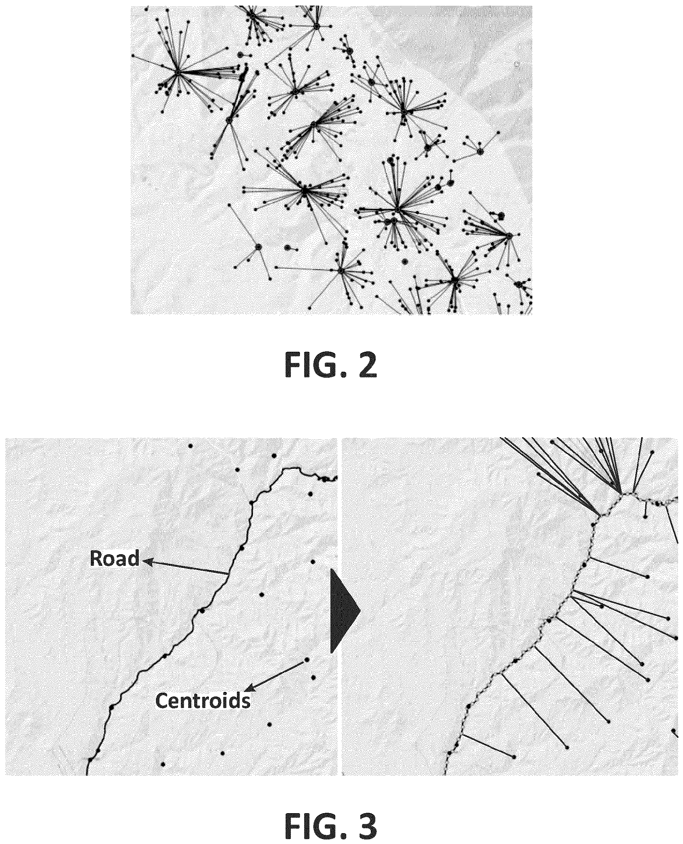

The output of the RAN planning (2) is therefore a set of clusters where deployments need to happen to cover all the unconnected settlements in a country with the least number of deployments. Each cluster contains information on where the site deployment should happen (centroid), the number of settlements with service and the population covered. In short, the Clustering module performs the Access Network Planning (ANP). Figure 2 shows an example of the result of this planning: the biggest spots represent the site where the towers should be located (where the site deployment should happen) and the smaller spots connected to each big spot the settlements which are served by said tower (even though the tower is not located in said settlement).

### Transport Network Design

The next step after creating the clusters (with the information of where the sites, i.e. base stations, should be located) is to map how each one of them could be connected to the network. This is the beginning of the Transport Network Planning (TNP). There are three ways to bring connectivity to a given place (in this case, to bring connectivity to the sites of the access network):
a) By creating a new fiber point of presence (PoP) with fiber optics which are usually deployed alongside roads coming from an existing fiber point of presence.
b) With microwave backhaul where a point-to-point radio link is created between a new or existing PoP and the site. In this case, there must be line of sight between both points. If there is no line of sight between the PoP and the site, intermediate repeaters can be placed in between creating a multihop connection.
c) Satellite backhaul. However, this solution will only be assigned to those clusters where a terrestrial solution could not be found (because this solution does not suit the technical nor the cost specifications needed for a good MBB connectivity).

To bring connectivity to the access network sites, several processes have to be implemented in parallel. The first one (4) will be to map out all the seed points (i.e. existing Points of Presence, PoPs) from the telecommunications infrastructure database. An example is shown below.

The second process (5) intends to determine all possible microwave hops between any pair of towers. Here, it will be included the already existing towers (i.e. the towers already deployed in an existing infrastructure, that is, the 2G towers) and the towers to be deployed to cover the Greenfield clusters (i.e the towers to be deployed in the sites determined in the access network designed using the previously disclosed process). However, as it will be explained later, in order to account for the differences between these two situations (an existing tower and a tower to be deployed), the weights are usually assigned in such a way that Greenfield towers (towers to be deployed) are penalized.

To do so, it performs a line-of-sight analysis for all pairs of towers based on altitude data. To clarify this, imagine two 30-meter towers located at different locations, the existence of a line of sight between them is determined, among other factors, by the orography of the area. If there is a mountain between them there probably will not be line of sight, while if the terrain is flat, there probably will be. If we determine this for any pair of towers, the information will be in the form of (for example) *'from tower A we would be able to deploy a Microwave link to towers B, C and D'* (that is, there is line of sight between tower A and towers B, C and D). Extending this to all the towers in a country allows to answer questions like *'To take a signal to tower A from any fiber PoP (towers B, C, D), the shortest path would be to go from B to E, from E to F and from F to A?'.* This is information stored in a graph and solved using Graph theory in the subsequent processes (11 onwards). That is, from the line of sight analysis, a graph will be created (6) with information about potential microwave paths for all the towers. The graph nodes are the sites (towers) and the graph edges are feasible unions between two towers via a microwave backhaul. In an embodiment, all the edges will have the same weight (e.g. 1) so what it will be minimized will be the number of edges used (i.e. the number of microwave hops). The node weight will usually correspond to (or at least depend on) the population covered by each site (by a 3G/4G/5G tower deployed in each site). In a preferred embodiment, the node weights will also take into account the resources and cost implied in the deployment of a new tower, compared with an already existing (2G) tower; so the node weights of the towers to be deployed (Greenfield towers, that is, non-existing towers) and/or the edge weights of an union using a tower to be deployed will be penalized, assigning to it a very high weight (for example, multiplying it by 10, 100 or any other value depending on the specific circumstances) so the non-existing towers are only chosen for a microwave hop if it is really necessary. To clarify this, let present three different scenarios. The first one, would be to connect an existing 2G tower with another existing 2G tower. In this case, the cost and difficulty is limited to deploying equipment on top of each tower. The second case would be to connect an existing 2G tower with a Greenfield planned tower. In this case, there is an additional difficulty (cost and resources) associated to building the second tower. The third case would be to connect two Greenfield towers, where both of them would need to be built. The weights in the microwave graph preferably account for this.

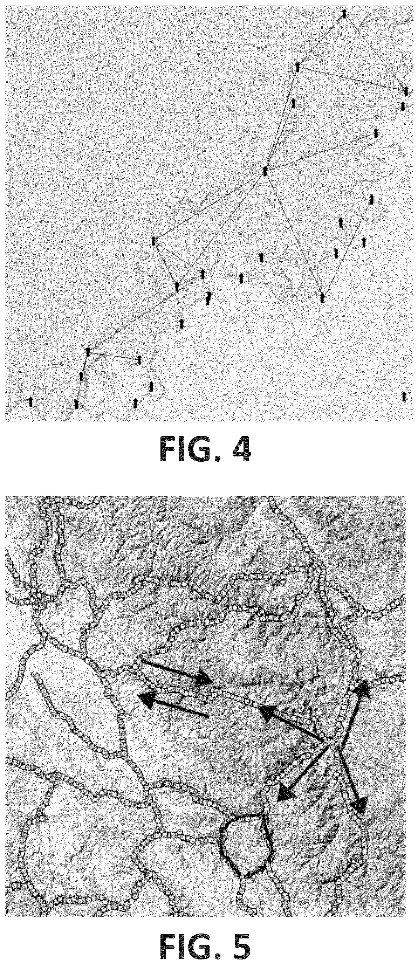

Figure 4 shows an example of said graph where each arrow represent a tower, where there is a line joining two towers when there is a line of sight between said towers.

In an embodiment, this microwave graph is optional. More specifically, this graph is only built (the line-of-sight analysis is done) if it is necessary, that is, if all the sites cannot be connected with fiber optics (so they have to be connected with microwave links) as it will be later explained.

To explain the next processes (8, 9 and 10), which implement the logic to deploy fiber optics, let us analyze a problem: Given 2 geographic points, the available different paths from one to another are nearly infinite; straight line may be considered a metric to evaluate the cost of connecting these 2 points with optic fiber. However, such consideration is not valid because of topography constraints, such as existence of mountains, rivers or inaccessible areas. The proposed method use existing road information to limit the number of possible paths. There are multiples reasons to use such an approach, as for example: 1) it limits the number of possibilities, to make problem treatable. 2) the existence of roads normally corresponds to existence of population settlements. 3) other infrastructures, such as energy grid, are normally close to the roads, so enable infrastructure sharing. 4) the reduced cost to bring network hardware to the final location.

In order to use road information, it is performed a discretization process (8) on the information from the road network database (7); this discretization process comprise transforming road information expressed as geometric lines (i.e. the shape of all roads) to a set of points (i.e. the road information is discretized, in other words the continuous road information has been transformed in discrete information). This way cluster centroids (the sites determined in the radio access network design) can be compared to road points, so information contained in each cluster (centroid) may be mapped and projected (9) onto the nearest or most optimal road that could be used to take fiber optics to that cluster. For example, it can be considered that a cluster centroid can be connected by a road that crosses the specific settlement where the centroid is located or alternatively by a road that passes at a moderate distance from the centroid and to which the cluster centroid could be connected by means of a point-to-point microwave backhaul, and in an alternative embodiment also by means of a multihop microwave backhaul. Figure 3 shows the discretization of roads and the mapping of all clusters onto the discretized road network.

This creates a sort of 'unconnected population road heat map' that indicates the impact of deploying fiber optics alongside each road in the country. In short the road data set has been discretized (the values has been transformed in discrete values) so it becomes a set of evenly distributed points along the road, and finally the information of each cluster (expressed geographically as its centroid, where the site is deployed) have been projected (mapped) onto the nearest road point. This information tells the proposed solution, for example, statements like *'if fiber were deployed along this road, clusters A, B, C and D would be nearby to the Transport Network'.* All this information (the mapping between the discrete road values and the centroids) is stored as well in a different graph (10) where the graph nodes are road points, the graph edges are unions between these points defined in such way that they take into account the road route (the road trajectory), the graph node weights correspond to the cluster populations associated to clusters projected onto the node, and the edge weights are the real road distance between two consecutive nodes. Figure 5 shows an example of said graph, where the roads are represented by a sequence of points (discrete values). It accounts for directionality junctions and real distances.

The list of projected points are the final target points to connect (by clustering settlements and projecting them to road, the final problem have been simplified). Furthermore, thanks to all previous process this problem can be now modeled as a Graph Theory problem. Thanks to the line-of-sight analysis, a graph is created (6) where each edge represent a feasible union between two towers via a microwave backhaul (in figure 1, said graph is called microwave graph and the information of said graph is stored in database 12). Thanks to the road-cluster merge processes, another graph has been created (10) where the nodes contain information on unconnected population and on which paths can be deployed with fiber optics according to the road information. In figure 1, said graph is called fiber graph (it can be called also fiber optic graph or optical fiber graph) and the information of said graph is stored in database 11. Aspects like road junctions, road directionality, etc. haven been thoroughly modeled while creating the graph. For the creation of said graph (10):
Each node is represented by a point in the road (see figure 5).
A weight is assigned to each node and it is computed according to the sum of the population in all clusters mapped to the node. Other metrics such as expected data traffic could be considered.
Junctions between roads are also added in the graph, with weight equal zero if there is not settlement mapped to it. This is important to determine the real path from any given pair of points.
Edges between nodes are computed according to the distance following the road.
Seed points (existing PoPs) are also added as nodes in the graph.

To account for other important aspects that define optimality, a model for the necessary conditions to be met by the Transport Network given a certain expected QoS and its relationship with the clusters (13) may be introduced into the system. To illustrate this, imagine that a given cluster that contains a total of 10.000 people is wanted to be served by the designed transport network. It is important to understand how well suited a Microwave backhaul solution would be compared to deploying Fiber Optics from the nearest PoP.

Introducing the above stated constraints, the graph may be solved (14 + 15 + 16) with different graph-theory algorithms (techniques) in order to generate deployment sequences and estimated cost (17).

According to an embodiment, the set of algorithms to solve the graph may have the following structure:
1. It first performs an individual analysis for each site to be connected by the transport network. It determines the optimal (usually the shortest distance path, and generally speaking the lowest weight path) standalone path to connect each site to an already existing fiber optic Point of Presence (PoP), considering all existing fiber PoPs. It does this with (solving) the Fiber Optic graph (10) that is, it determines the local optimal fiber optic deployment (14) for each node (for each site). To solve this, any known graph solving algorithm can be used (for example, Dijkstra's shortest path algorithm which is selected in an embodiment for simplicity's sake). If further constraints were needed, more complex algorithms such as Bellman-Ford or Johnson have been tested successfully. The output of this sub-process draws, for each site analyzed individually: what is the optimal fiber path needed to connect the site (more specifically, the road node onto which it has been projected) to an existing PoP, with information about its actual shape, how long it is, how many clusters would be connected (unlocked) along the way (that is the sites covering said clusters will be connected with said path), ...
2. Once this is done, it performs a global optimization (16) that designs the final optimal network for fiber and microwave deployments (preferably fulfilling the QoS constraints if any). To do so, the flow is as follows:
   a) From the fiber paths determined in step 1, and by means of a second, different, solution of the (Fiber Optic) graph, select the fiber deployment (path) with a highest population density per length unit of deployed fiber is selected (i.e. total population unlocked/covered directly - final node - and indirectly - nodes along the way - divided by the total length of the fiber deployed). Alternatively, the density of traffic per length unit of deployed fiber can be used, that is the total estimated network traffic served (number of users times the estimated traffic needs per user, according to a user segmentation and traffic estimation model) per length unit of deployed fiber. Then add it to the deployment list.
   b) Remove all clusters unlocked by the previous deployment from the list of clusters that need to be connected. They already have.
   c) Repeat the process iteratively, updating the density of the selected deployments at each iteration, until the density associated to the best deployment is below a given threshold. Below this threshold, we consider it is not worth connecting a site with fiber optics.
   d) Once all the fiber deployments have been done, microwave chains are used to extend the network. All sites that could not be connected with fiber optics are selected and find the optimal way to connect them with a chain of microwave links. In order to do that, for all these (remaining) sites, it is determined an optimal path (usually the shortest distance path, and generally speaking the lowest weight path) to connect each site using microwave chains. It does this with (solving) the Microwave Graph (6) that is, it determines the local optimal microwave deployment (15) for each node (for each site). To solve this, any known algorithm can be used (for example, Bellman-Ford or Johnson or even Dijkstra's shortest path algorithm which is selected in an embodiment for simplicity's sake). In order to further optimize the selected path, a procedure analogous to the procedure disclosed in steps 2 a), b) and c) may be followed.
      The links (microwave paths) can start either at an existing fiber PoP or at a site that has been deployed with fiber according to the previous process. This sub-process tells us how to connect all clusters that could not be connected with fiber but that can be connected with a number of microwave hops between existing towers.
   e) The remaining clusters (the clusters whose sites have not been connected using fiber optic paths or microwave paths in the previous steps, for example for orographyc reasons, for costs reasons...) do not have a solution with existing (fiber optic or microwave) infrastructure. We therefore need to characterize their more likely solution: For those sites that are relatively close to fiber deployments or any point of presence, it can be safely assumed that it will be better to connect them with a microwave chain that uses a new tower as intermediate hop. For the more isolated sites, it should be assumed that an aerial solution (either satellite or something more disruptive) will have to be put in place.

The final output of this process is a network that contains the elements below and that guarantees optimality to connect all unconnected population. The elements of this network are:
- All access sites that need to be deployed (categorized by Overlay or Greenfield). Information for each cluster of settlements (total population, population distribution, etc.) covered by each site should be also included to help RAN engineers define the access solution in more detail.
- The full transport network, comprising:
   - All fiber deployments with information on actual path, length, population unlocked. Prioritization index based on unlocked population density.
   - All microwave deployments with information on actual path, number and location of the hops of the chain, population unlocked.
   - All sites that would need an intermediate site to have a microwave solution with information on the best fiber PoP to use as initial point of the chain.
   - All sites that need an aerial (e.g. satellite) transport solution.

The optimization algorithm (bullet 2 above) can also follow be modified to follow a revenue / cost model, that is the actual costs of the deployment is also taken into account in addition to or instead of just the length of the fiber deployed. Therefore, the costs of the different aspects of the deployment will be considered, including for example: Fixed costs for any fiber optics deployment, variable costs of deploying fiber optics (cost per km), costs associated to generating an interconnection, fixed + variable costs associated to deploying a microwave hop or any other cost parameter. Additionally, instead of just the population or the expected data traffic, the actual expected revenues derived of the data services provided to each cluster can be considered.

Finally, regarding the graphs (fiber and microwave graphs), the following must be taken into account: In Graph Theory, there are different kinds of graphs. Most of the algorithms and tools are designed for DAGs (Directed Acyclic Graphs). These graphs have two characteristics: 1) Each edge has one specific direction (i.e. the edge between node A and node B is directed either from A to B or from B to A, but not both). 2) The graph has no closed paths (i.e. there is no loop such as node A -> node B, node B->node C, node C ->node A). This kind of graphs is not always the best option to model the problem to be solved here. For instance, imagine a road composed by 3 nodes: A, B and C. A potential deployment along that road in the direction from A to B to C and the same deployment in the opposite direction may be considered. Therefore, in this context it is preferably to use generic graphs (not Directed Acyclic Graphs) where some standard algorithms cannot be used.

The proposed embodiments can be implemented by means of software elements, hardware elements, firmware elements, or any suitable combination of them.

Note that in this text, the term "comprises" and its derivations (such as "comprising", etc.) should not be understood in an excluding sense, that is, these terms should not be interpreted as excluding the possibility that what is described and defined may include further elements, steps, etc.

The matters defined in this detailed description are provided to assist in a comprehensive understanding of the invention. Accordingly, those of ordinary skill in the art will recognize that variation changes and modifications of the embodiments described herein can be made without departing from the scope of the invention. Also, description of well-known functions and elements are omitted for clarity and conciseness. Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

## Claims

1. A computer implemented method for planning an access network and a transport network of a first mobile telecommunications network to cover a given area, the method comprising:
a) determining sites to locate base stations of the first mobile telecommunications network based at least on information obtained from a first database of location and population of all the settlements to be covered by the first mobile telecommunications network;
b) obtaining from a second database geographic information about roads in the given area, dividing each road in the given area in a set of road points and associating each site determined in step a) to the nearest road point;
c) creating a first graph, called fiber graph, where the fiber graph nodes are the road points, the fiber graph edges are unions between the road points, the fiber graph node weights correspond to the sum of the population covered by the base stations whose sites are associated to each road point, and the edge weights are the road distance between two consecutive nodes;
d) determining fiber deployments to connect sites determined in step a) based at least on calculating optimal paths in the fiber graph, where this step comprises: determining the optimal standalone fiber path in the fiber graph for the fiber graph node associated to each site using a first graph solving algorithm;
where the method is **characterized by**:
the sites to locate the base stations are determined based also on the location of already existing base stations of a second mobile telecommunications network already deployed in the given area and step a) comprises:
a1) selecting as sites to locate base stations, the locations of already existing base stations of the second mobile telecommunications network, and subtracting settlements covered by base stations in said selected sites from the settlements to be covered;
a2) selecting a site in the given area that covers the highest population in the settlements to be still covered assuming that a base station located in each site is a tower of a certain height, using a propagation model to estimate the coverage radius;
a3) determining the settlements covered by the base station located in said selected site and removing said settlements from the settlements to be covered;
a4) repeating steps a2 and a3) until there are no more settlements to covered in the given area.

2. The method according to any of previous claims where the first mobile telecommunications network is a 3G, 4G and/or 5G mobile telecommunications network.

3. The method according to any of previous claims where already existing fiber optic points of presence, PoPs, of the second mobile telecommunications network already deployed in the given area are considered also as graph nodes for the fiber graph created in step c).

4. The method according to any of the previous claims where the second mobile telecommunications network is a 2G network.

5. The method according to any of previous claims where step d) comprises:
d1) from the fiber paths determined, selecting a fiber path based at least on one of the following criteria: density of population per length unit of the path or density of traffic per length unit of the path, taking into account the population covered by the sites associated to fiber graph nodes connected by said selected path;
d2) removing all the sites connected by said selected path;
d3) repeating steps d1) to d2) until the density of the path selected in d2) is below a given threshold;

6. The method according to claim 5 where optical fiber cost or revenue and/or quality of service, QoS, constraints are also taken into account as a factor for selecting the fiber path in step d1).

7. The method according to any of the previous claims where the method further comprises
e) performing a line of sight analysis between any pair of base stations whose location has been determined in step a) and creating a second graph, called microwave graph, where the microwave graph nodes are the sites determined in step a) and the microwave graph edges are feasible microwave unions between base stations based on the line of sight analysis;
f) determining all the sites not connected by the fiber deployments paths selected in step d) and for said sites, determining the optimal microwave path to connect each of said sites in the microwave graph using a graph solving algorithm, where the microwave paths start either at an existing fiber PoP or at a site connected by a fiber path.

8. The method according to claim 7 where in the microwave graph, the graph nodes corresponding to sites whose location is not a location of an already existing base station of a second mobile telecommunications network are penalized with respect of the graphs nodes corresponding to sites whose location is a location of an already existing base station of the second mobile telecommunications network.

9. The method according to claim 7 or 8 where microwave cost or revenue and/or quality of service, QoS, constraints, are also taken into account as a factor for selecting the optimal microwave path in step f).

10. The method according to any of the claims 8-9, wherein if the optimal microwave determined in step f) for a site does no fulfil certain predefined quality, revenue and/or cost requirements, said site is connected to the rest of the transport network with a microwave chain that uses a new site as intermediate hop or by a satellite link.

11. An electronic system for planning an access network and a transport network of a firs mobile telecommunications network to cover a given area, the system comprising:
- An input receiver configured to receive settlements information about location and population of all the settlements to be covered by the first mobile telecommunications network and geographic road information of roads of the given area;
- At least one database to store the received settlements information and geographic road information;
- At least one processor configured to:
a) determine sites to locate the base stations of the first mobile telecommunications network based at least on the received settlement information;
b) based on the received geographic road information, divide each road in the given area in a set of road points and associate each site determined in step a) to the nearest road point;
c) create a first graph, called fiber graph, where the fiber graph nodes are the road points, the fiber graph edges are unions between the road points, the fiber graph node weights correspond to the sum of the population covered by the base stations whose sites are associated to each road point, and the edge weights are the road distance between two consecutive nodes;
d) determine fiber deployments to connect the sites determined in step a) based at least on calculating optimal paths in the fiber graph, where this determination comprises: determining the optimal standalone fiber path in the fiber graph for the fiber graph node associated to each site using a first graph solving algorithm;
where the system is **characterized by**: the sites to locate the base stations are determined based also on the location of already existing base stations of a second mobile telecommunications network already deployed in the given area and where said determination of sites comprises:
a1) selecting as sites to locate base stations, the locations of already existing base stations of the second mobile telecommunications network, and subtracting settlements covered by base stations in said selected sites from the settlements to be covered;
a2) selecting a site in the given area that covers the highest population in the settlements to be still covered assuming that a base station located in each site is a tower of a certain height, using a propagation model to estimate the coverage radius; a3) determining the settlements covered by the base station located in said selected site and removing said settlements from the settlements to be covered;
a4) repeating a2 and a3) until there are no more settlements to covered in the given area.

12. A non-transitory computer readable medium encoded with a computer program comprising instructions for carrying out all the steps of the method according to any of the claim 1-10, when said computer program is executed on a computer system.

## Patentansprüche

1. Ein computerimplementiertes Verfahren zum Planen eines Zugriffsnetzes und eines Transportnetzes eines ersten Mobiltelekommunikationsnetzes, um einen bestimmten Bereich abzudecken, wobei das Verfahren folgende Schritte aufweist:
a) Bestimmen von Standorten zum Anordnen von Basisstationen des ersten Mobiltelekommunikationsnetzes basierend zumindest auf Informationen, die von einer ersten Datenbank mit Lage und Bevölkerung aller Siedlungen, die durch das erste Mobiltelekommunikationsnetzwerk abzudecken sind, erhalten werden;
b) Erhalten, von einer zweiten Datenbank, von geografischen Informationen über Straßen in dem bestimmten Bereich, Teilen jeder Straße in dem bestimmten Bereich in einen Satz von Straßenpunkten und Zuordnen jedes Standorts, der bei Schritt a) bestimmt wird, zu dem nächstgelegenen Straßenpunkt;
c) Erzeugen eines ersten Graphen, genannt Fasergraph, wobei die Fasergraphenknoten die Straßenpunkte sind, die Fasergraphenkanten Verbindungen zwischen den Straßenpunkten sind, die Fasergraphenknotengewichte der Summe der Bevölkerung entsprechen, die durch die Basisstationen abgedeckt wird, deren Standorte jedem Straßenpunkt zugeordnet sind, und die Kantengewichte der Straßenabstand zwischen zwei aufeinanderfolgenden Knoten sind;
d) Bestimmen der Faserverwendungen zum Verbinden von Standorten, die bei Schritt a) bestimmt werden, basierend zumindest auf einer Berechnung optimaler Pfade in dem Fasergraphen, wobei dieser Schritt Folgendes aufweist: Bestimmen des optimalen unabhängigen Faserpfads in dem Fasergraphen für den Fasergraphenknoten, der jedem Standort zugeordnet ist, unter Verwendung eines ersten Graphenlösungsalgorithmus;
wobei das Verfahren **gekennzeichnet ist durch**:
Bestimmen der Standorte zum Anordnen der Basisstationen basierend auch auf der Lage bereits bestehender Basisstationen eines zweiten Mobiltelekommunikationsnetzes, das bereits in dem bestimmten Bereich verwendet wird und bei Schritt a) folgende Schritte aufweist:
a1) Auswählen, als Standorte zum Anordnen von Basisstationen, der Lagen bereits bestehender Basisstationen des zweiten Mobiltelekommunikationsnetzes und Subtrahieren von Siedlungen, die durch Basisstationen an diesen ausgewählten Standorten abgedeckt werden, von den Siedlungen, die abzudecken sind;
a2) Auswählen eines Standorts in dem bestimmten Bereich, der die höchste Bevölkerung in den Siedlungen abdeckt, die noch abzudecken sind, unter der Annahme, dass eine Basisstation, die an jedem Standort angeordnet ist, ein Turm einer bestimmten Höhe ist, unter Verwendung eines Ausbreitungsmodells zum Schätzen des Abdeckungsradius;
a3) Bestimmen der Siedlungen, die **durch** die Basisstation abgedeckt werden, die an dem ausgewählten Standort angeordnet ist, und Entfernen der Siedlungen von den Siedlungen, die abzudecken sind;
a4) Wiederholen der Schritte a2 und a3), bis es keine weiteren abzudeckenden Siedlungen mehr in dem bestimmten Bereich gibt.

2. Das Verfahren gemäß einem der vorhergehenden Ansprüche, bei dem das erste Mobiltelekommunikationsnetz ein 3G, 4G und/oder 5G Mobiltelekommunikationsnetz ist.

3. Das Verfahren gemäß einem der vorhergehenden Ansprüche, bei dem bereits bestehende Glasfaser-PoP (PoP = Point of Presence) des zweiten Telekommunikationsnetzes, die bereits in dem bestimmten Bereich verwendet werden, auch als Graphenknoten für den bei Schritt c) erzeugten Fasergraphen betrachtet werden.

4. Das Verfahren gemäß einem der vorhergehenden Ansprüche, bei dem das zweite Mobiltelekommunikationsnetz ein 2G Netz ist.

5. Das Verfahren gemäß einem der vorhergehenden Ansprüche, bei dem Schritt d) Folgendes aufweist:
d1) von den bestimmten Faserpfaden, Auswählen eines Faserpfads basierend zumindest auf einem der folgenden Kriterien: Dichte der Bevölkerung pro Längeneinheit des Pfads oder Dichte des Verkehrs pro Längeneinheit des Pfads, unter Berücksichtigung der Bevölkerung, die durch die Standorte abgedeckt wird, die Fasergraphenknoten zugeordnet sind, die durch den ausgewählten Pfad verbunden sind;
d2) Entfernen aller Standorte, die durch den ausgewählten Pfad verbunden sind;
d3) Wiederholen der Schritte d1) bis d2), bis die Dichte des Pfads, der bei d2) ausgewählt wird, unter einem bestimmten Schwellenwert liegt.

6. Das Verfahren gemäß Anspruch 5, bei dem Glasfaserkosten oder -einnahmen und/oder Dienstgüte, QoS, -Beschränkungen auch als ein Faktor zum Auswählen des Faserpfads bei Schritt d1) berücksichtigt werden.

7. Das Verfahren gemäß einem der vorhergehenden Ansprüche, bei dem das Verfahren ferner folgende Schritte aufweist:
e) Durchführen einer Sichtlinienanalyse zwischen jedem Paar von Basisstationen, deren Lage bei Schritt a) bestimmt wurde, und Erzeugen eines zweiten Graphen, genannt Mikrowellengraph, wobei die Mikrowellengraphenknoten die Standorte sind, die bei Schritt a) bestimmt werden, und die Mikrowellengraphenkanten mögliche Mikrowellenverbindungen zwischen Basisstationen sind, basierend auf der Sichtlinienanalyse;
f) Bestimmen aller Standorte, die nicht durch die Faserverwendungspfade verbunden sind, die bei Schritt d) ausgewählt werden, und für diese Standorte, Bestimmen des optimalen Mikrowellenpfads, um jeden der Standorte in dem Mikrowellengraphen unter Verwendung eines Graphenlösungsalgorithmus zu verbinden, wobei die Mikrowellenpfade entweder an einem bestehenden Faser-PoP oder an einem Standort beginnen, der durch einen Faserpfad verbunden ist.

8. Das Verfahren gemäß Anspruch 7, bei dem in dem Mikrowellengraph die Graphenknoten, die Standorten entsprechen, deren Lage keine Lage einer bereits bestehenden Basisstation eines zweiten Mobiltelekommunikationsnetzes ist, benachteiligt werden in Bezug auf die Graphenknoten, die Standorten entsprechen, deren Lage eine Lage einer bereits bestehenden Basisstation des zweiten Mobiltelekommunikationsnetzes ist.

9. Das Verfahren gemäß Anspruch 7 oder 8, bei dem Mikrowellenkosten oder - einnahmen und/oder Dienstgüte, QoS,-Beschränkungen auch als ein Faktor zum Auswählen des optimalen Mikrowellenpfads bei Schritt f) berücksichtigt werden.

10. Das Verfahren gemäß einem der Ansprüche 8-9, bei dem, falls die optimale Mikrowelle, die bei Schritt f) bestimmt wird, für einen Standort keine bestimmten vordefinierten Qualitäts-, Einnahmen- und/oder Kostenanforderungen erfüllt, der Standort mit dem Rest des Transportnetzes mit einer Mikrowellenkette, die einen neuen Standort als Zwischensprung verwendet, oder durch eine Satellitenverbindung verbunden wird.

11. Ein elektronisches System zum Planen eines Zugriffnetzes und eines Transportnetzes eines ersten Mobiltelekommunikationsnetzes, um einen bestimmten Bereich abzudecken, wobei das System folgende Merkmale aufweist:
einen Eingabeempfänger, der konfiguriert ist, Siedlungsinformationen über Lage und Bevölkerung aller Siedlungen, die durch das erste Mobiltelekommunikationsnetzwerk abzudecken sind, und geografische Straßeninformationen über Straßen des bestimmten Bereichs zu empfangen;
zumindest eine Datenbank zum Speichern der empfangenen Siedlungsinformationen und geografischen Straßeninformationen;
zumindest einen Prozessor, der konfiguriert ist zum:
a) Bestimmen von Standorten zum Anordnen von Basisstationen des ersten Mobiltelekommunikationsnetzes basierend zumindest auf den empfangenen Siedlungsinformationen;
b) basierend auf den empfangenen geografischen Straßeninformationen, Teilen jeder Straße in dem bestimmten Bereich in einen Satz von Straßenpunkten und Zuordnen jedes Standorts, der bei Schritt a) bestimmt wird, zu dem nächstgelegenen Straßenpunkt;
c) Erzeugen eines ersten Graphen, genannt Fasergraph, wobei die Fasergraphenknoten die Straßenpunkte sind, die Fasergraphenkanten Verbindungen zwischen den Straßenpunkten sind, die Fasergraphenknotengewichte der Summe der Bevölkerung entsprechen, die durch die Basisstationen abgedeckt wird, deren Standorte jedem Straßenpunkt zugeordnet sind, und die Kantengewichte der Straßenabstand zwischen zwei aufeinanderfolgenden Knoten sind;
d) Bestimmen der Faserverwendungen zum Verbinden der Standorte, die bei Schritt a) bestimmt werden, basierend zumindest auf einer Berechnung optimaler Pfade in dem Fasergraphen, wobei diese Bestimmung Folgendes aufweist: Bestimmen des optimalen unabhängigen Faserpfads in dem Fasergraphen für den Fasergraphenknoten, der jedem Standort zugeordnet ist, unter Verwendung eines ersten Graphenlösungsalgorithmus;
wobei das System **gekennzeichnet ist durch**:
Bestimmen der Standorte zum Anordnen der Basisstationen basierend auch auf der Lage bereits bestehender Basisstationen eines zweiten Mobiltelekommunikationsnetzes, das bereits in dem bestimmten Bereich verwendet wird und wobei die Bestimmung der Standorte folgende Schritte aufweist:
a1) Auswählen, als Standorte zum Anordnen von Basisstationen, der Lagen bereits bestehender Basisstationen des zweiten Mobiltelekommunikationsnetzes und Subtrahieren von Siedlungen, die **durch** Basisstationen an diesen ausgewählten Standorten abgedeckt werden, von den Siedlungen, die abzudecken sind;
a2) Auswählen eines Standorts in dem bestimmten Bereich, der die höchste Bevölkerung in den Siedlungen abdeckt, die noch abzudecken sind, unter der Annahme, dass eine Basisstation, die an jedem Standort angeordnet ist, ein Turm einer bestimmten Höhe ist, unter Verwendung eines Ausbreitungsmodells zum Schätzen des Abdeckungsradius;
a3) Bestimmen der Siedlungen, die **durch** die Basisstation abgedeckt werden, die an dem ausgewählten Standort angeordnet ist, und Entfernen der Siedlungen von den Siedlungen, die abzudecken sind;
a4) Wiederholen der Schritte a2 und a3), bis es keine weiteren abzudeckenden Siedlungen mehr in dem bestimmten Bereich gibt.

12. Ein nichtflüchtiges computerlesbares Medium, das mit einem Computerprogramm codiert ist, das Anweisungen aufweist zum Ausführen aller Schritte des Verfahrens gemäß einem der Ansprüche 1-10, wenn das Computerprogramm auf einem Computersystem ausgeführt wird.

## Revendications

1. Procédé mis en œuvre par ordinateur permettant de planifier un réseau d'accès et un réseau de transport d'un premier réseau de télécommunications mobile pour couvrir une zone donnée, le procédé comprenant :
a) déterminer des sites pour localiser des stations de base du premier réseau de télécommunications mobile sur la base au moins d'informations obtenues à partir d'une première base de données de localisation et de population de toutes les installations devant être couvertes par le premier réseau de télécommunications mobile ;
b) obtenir, à partir d'une deuxième base de données, des informations géographiques sur des routes dans la zone donnée, diviser chaque route de la zone donnée en un ensemble de points de route et associer chaque site déterminé à l'étape a) au point de route le plus proche ;
c) créer un premier graphe, appelé graphe de fibres, où les nœuds de graphe de fibres sont les points de route, les bords de graphe de fibres sont des unions entre les points de route, les poids de nœud de graphe de fibres correspondent à la somme de la population couverte par les stations de base dont les sites sont associés à chaque point de route, et les poids de bord sont la distance de route entre deux nœuds consécutifs ;
d) déterminer des déploiements de fibres pour connecter des sites déterminés à l'étape a) sur la base au moins du calcul de chemins optimaux dans le graphe de fibres, où cette étape comprend : la détermination du chemin de fibre autonome optimal dans le graphe de fibres pour le nœud de graphe de fibres associé à chaque site en utilisant un premier algorithme de résolution de graphe ;
où le procédé est **caractérisé en ce que** :
les sites pour localiser les stations de base sont déterminés sur la base également de la localisation de stations de base déjà existantes d'un deuxième réseau de télécommunications mobile déjà déployé dans la zone donnée et l'étape a) comprend :
a1) sélectionner, comme sites pour localiser des stations de base, les localisations de stations de base déjà existantes du deuxième réseau de télécommunications mobile, et soustraire des installations couvertes par des stations de base dans lesdits sites sélectionnés des installations à couvrir ;
a2) sélectionner un site dans la zone donnée qui couvre la population la plus élevée dans les installations à couvrir toujours en supposant qu'une station de base située dans chaque site est une tour d'une certaine hauteur, utiliser un modèle de propagation pour estimer le rayon de couverture ;
a3) déterminer les installations couvertes par la station de base située dans ledit site sélectionné et retirer lesdites installations des installations à couvrir ;
a4) répéter les étapes a2 et a3) jusqu'à ce qu'il n'y ait plus d'installations à couvrir dans la zone donnée.

2. Procédé selon l'une des revendications précédentes, dans lequel le premier réseau de télécommunications mobile est un réseau de télécommunications mobile 3G, 4G et/ou 5G.

3. Procédé selon l'une des revendications précédentes, dans lequel des points de présence de fibre optique déjà existants, PoPs, du deuxième réseau de télécommunications mobile déjà déployé dans la zone donnée sont également considérés comme des nœuds de graphe pour le graphe de fibres créé à l'étape c).

4. Procédé selon l'une des revendications précédentes, dans lequel le deuxième réseau de télécommunications mobile est un réseau 2G.

5. Procédé selon l'une des revendications précédentes, dans lequel l'étape d) comprend :
d1) parmi les chemins de fibre déterminés, sélectionner un chemin de fibre sur la base au moins de l'un des critères suivants : la densité de population par unité de longueur du chemin ou la densité de trafic par unité de longueur du chemin, en tenant compte de la population couverte par les sites associés à des nœuds de graphe de fibres connectés par ledit chemin sélectionné ;
d2) retirer tous les sites connectés par ledit chemin sélectionné ;
d3) répéter les étapes d1) à d2) jusqu'à ce que la densité du chemin sélectionné en d2) soit inférieure à un seuil donné.

6. Procédé selon la revendication 5, dans lequel des contraintes de coût ou de revenu et/ou de qualité de service, QoS, de fibre optique sont également prises en compte comme facteur de sélection du chemin de fibre à l'étape d1).

7. Procédé selon l'une des revendications précédentes, dans lequel le procédé comprend en outre
e) effectuer une analyse de ligne de visée entre toute paire de stations de base dont la localisation a été déterminée à l'étape a) et créer un deuxième graphe, appelé graphe micro-onde,
où les nœuds de graphe micro-onde sont les sites déterminés à l'étape a) et les bords de graphe micro-onde sont des unions micro-ondes réalisables entre les stations de base sur la base de l'analyse de ligne de visée :
f) déterminer tous les sites non connectés par les chemins de déploiements de fibres sélectionnés à l'étape d) et pour lesdits sites, déterminer le chemin micro-onde optimal pour connecter chacun desdits sites dans le graphe micro-onde en utilisant un algorithme de résolution de graphe, où les chemins micro-ondes démarrent soit en un PoP de fibre existant ou en un site connecté par un chemin de fibre.

8. Procédé selon la revendication 7, dans lequel, dans le graphe micro-onde, les nœuds de graphe correspondant à des sites dont la localisation n'est pas une localisation d'une station de base déjà existante d'un deuxième réseau de télécommunication mobile sont pénalisés par rapport aux nœuds de graphe correspondant à des sites dont la localisation est une localisation d'une station de base déjà existante du deuxième réseau de télécommunications mobile.

9. Procédé selon la revendication 7 ou 8, dans lequel les contraintes de coût ou de revenu et/ou de qualité de service, QoS, de micro-onde sont également prises en compte comme facteur de sélection du chemin micro-onde optimal à l'étape f).

10. Procédé selon l'une des revendications 8 et 9, dans lequel si le chemin micro-onde optimale déterminée à l'étape f) pour un site ne répond pas à certaines exigences prédéfinies de qualité, de revenu et/ou de coût, ledit site est connecté au reste du réseau de transport par une chaîne micro-onde qui utilise un nouveau site comme saut intermédiaire ou par une liaison satellite.

11. Système électronique de planification d'un réseau d'accès et d'un réseau de transport d'un premier réseau de télécommunications mobile pour couvrir une zone donnée, le système comprenant :
- un récepteur d'entrée configuré pour recevoir des informations d'installations concernant la localisation et la population de toutes les installations à couvrir par le premier réseau de télécommunications mobile et des informations routières géographiques de routes de la zone donnée ;
- au moins une base de données pour stocker les informations d'installations et les informations routières géographiques reçues ;
- au moins un processeur configuré pour :
a) déterminer des sites pour localiser les stations de base du premier réseau de télécommunications mobile sur la base au moins des informations d'installations reçues ;
b) sur la base des informations routières géographiques reçues, diviser chaque route dans la zone donnée en un ensemble de points de route et associer chaque site déterminé à l'étape a) au point de route le plus proche ;
c) créer un premier graphe, appelé graphe de fibres, où les nœuds de graphe de fibres sont les points de route, les bords de graphe de fibres sont des unions entre les points de route, les poids de nœud de graphe de fibres correspondent à la somme de la population couverte par les stations de base dont les sites sont associés à chaque point de route, et les poids de bord sont la distance de route entre deux nœuds consécutifs ;
d) déterminer des déploiements de fibres pour connecter les sites déterminés à l'étape a) sur la base au moins du calcul de chemins optimaux dans le graphe de fibres, où cette détermination comprend : la détermination du chemin de fibre autonome optimal dans le graphe de fibres pour le nœud de graphe de fibres associé à chaque site en utilisant un premier algorithme de résolution de graphe ;
où le système est **caractérisé en ce que** :
les sites pour localiser les stations de base sont déterminés sur la base également de la localisation des stations de base déjà existantes d'un deuxième réseau de télécommunications mobile déjà déployé dans la zone donnée et où ladite détermination de sites comprend
a1) sélectionner, comme sites pour localiser des stations de base, les localisations de stations de base déjà existantes du deuxième réseau de télécommunications mobile, et soustraire des installations couvertes par des stations de base dans lesdits sites sélectionnés des installations à couvrir ;
a2) sélectionner un site dans la zone donnée qui couvre la population la plus élevée dans les installations à couvrir toujours en supposant qu'une station de base située dans chaque site est une tour d'une certaine hauteur, utiliser un modèle de propagation pour estimer le rayon de couverture ;
a3) déterminer les installations couvertes par la station de base située dans ledit site sélectionné et retirer lesdites installations des installations à couvrir ;
a4) répéter a2 et a3) jusqu'à ce qu'il n'y ait plus d'installations à couvrir dans la zone donnée.

12. Support non transitoire lisible par ordinateur codé avec un programme informatique comprenant des instructions pour effectuer toutes les étapes du procédé selon l'une des revendications 1 à 10, lorsque ledit programme informatique est exécuté sur un système informatique.
